# EUROPÄISCHE PATENTANMELDUNG

(11) **EP 2 910 403 A1**
(43) Veröffentlichungstag der Anmeldung: **26.08.2015**
(21) Anmeldenummer: 14155956.7
(22) Anmeldetag: 20.02.2014
(51) Int. Cl.: B60L 11/18, H02M 1/12, H02J 7/02, H02J 17/00

(54) **Induktive Ladevorrichtung**

(71) Anmelder: Brusa Elektronik AG, 9466 Sennwald (CH)
(72) Erfinder: Krause, Axel, 9650 Nesslau (CH)
(74) Vertreter: Patentbüro Paul Rosenich AG

(57) **Zusammenfassung**

Die Erfindung bezieht sich auf eine induktive Ladevorrichtung (1) zum Laden eines elektrischen Energiespeichers (3) eines Fahrzeuges (2), umfassend eine Primärspule (4) und einen der Primärspule (4) vorangeschalteten Wechselrichter (5) zur Umwandlung einer Gleichspannung in eine Wechselspannung, wobei der Wechselrichter (5) einen Gleichspannungseingang (6) und einen Wechselspannungsausgang (7) umfasst und wobei zwischen dem Gleichspannungseingang (6) und dem Wechselspannungsausgang (7) zumindest eine Schalterstufe (8, 9) und zumindest ein Filter (13) geschaltet sind.

Zur Erzeugung einer möglichst sinusförmigen Wechselspannung ohne Oberwellen, wobei der Wirkungsgrad der Leistungsübertragung nicht beeinträchtigt werden soll, umfasst der Filter (13) einen Streufeldtransformator (10) mit einem ersten Wicklungsabschnitt (11) und einem zweiten Wicklungsabschnitt (12).

## Beschreibung

Die Erfindung betrifft eine induktive Ladevorrichtung zum Laden eines elektrischen Energiespeichers eines Fahrzeuges nach dem Oberbegriff des Anspruchs 1 sowie ein Verfahren zum Betreiben einer induktiven Ladevorrichtung.

Aufgrund Ihrer Flexibilität und Benutzerfreundlichkeit kommen zunehmend Systeme für induktive Energieübertragung zum kontaktlosen Laden von Elektrofahrzeugen zum Einsatz. Dabei wird Energie von einer mit Wechselspannung beaufschlagten Primärspule auf eine fahrzeugseitig angeordnete Sekundärspule mit nachgeschaltetem Gleichrichter übertragen.

In einem solchen System wird üblicherweise ein magnetisches Wechselfeld im Frequenzbereich von 25kHz bis 150kHz erzeugt, wobei die bevorzugte Frequenz in dem durch die Normengremien festgelegten Band zwischen 80 und 90 kHz liegt. Dabei muss beachtet werden, dass außerhalb dieses Frequenzbandes die Grenzwerte für die Emission elektromagnetischer Wellen durch international gültige Normen festgelegt sind. Um diese Grenzwerte einzuhalten, ist es entscheidend, dass das magnetische Wechselfeld mit der Grundschwingung im Bereich von 25kHz bis150kHz arbeitet und nur einen sehr geringen Anteil an Oberwellen enthält. Anderseits soll aber der Wirkungsgrad der Leistungsübertragung möglichst hoch sein. Deshalb wird mit elektronischen Schaltern ein Rechtecksignal mit der Grundfrequenz des magnetischen Wechselfeldes erzeugt, wodurch die Verluste gering gehalten werden können. Das Rechtecksignal enthält aber einen beträchtlichen Anteil an unerwünschten Oberwellen. Letztere werden im Stand der Technik mittels eines entsprechend dimensionierten LC-Filters ausgefiltert. Allerdings erfordern derartige Filter, insbesondere aufgrund der Dimensionierung der Induktivität, ein beträchtliches Volumen (Platzbedarf), worin einer der sich aus dem Stand der Technik ergebenden Nachteile liegt. Zudem können vielfach die Oberwellen nicht in ausreichendem Maß beseitigt werden.

Aufgabe der vorliegenden Erfindung ist es somit, diese Nachteile zu beseitigen und eine Ladevorrichtung bereitzustellen, bei der sichergestellt ist, dass die Oberwellen in ausreichendem Maße eliminiert werden und die an der Primärspule anliegende Wechselspannung einer idealen Sinusform möglichst nahe kommt. Gleichzeitig soll mit der Erfindung die Möglichkeit geschaffen werden, die Ladevorrichtung, insbesondere den Wechselrichter mit dem Filter, platzsparend zu dimensionieren, wodurch die Anordnung und/oder Anwendung einer induktiven Ladevorrichtung höhere Flexibilität aufweist.

Diese Aufgabe wird mit einer eingangs genannten induktiven Ladevorrichtung dadurch gelöst, dass das Filter einen Streufeldtransformator mit einem ersten Wicklungsabschnitt und einem zweiten Wicklungsabschnitt umfasst.

Der erste Wicklungsabschnitt und der zweite Wicklungsabschnitt sind miteinander induktiv gekoppelt und vorzugsweise auf demselben Kern gewickelt. Im Grunde handelt es sich bei dem Streufeldtransformator um gekoppelte Drosseln. Allerdings ist die Kopplung derart, dass nur ein Teil des von einem Wicklungsabschnitt (bzw. einer Drossel) erzeugten Flusses durchdringt auch den anderen Wicklungsabschnitt (bzw. die andere Drossel) und umgekehrt. Der andere (die jeweils andere Drossel nicht durchdringende) Teil des Flusses wird Streufluss oder Streufeld genannt.

In einer bevorzugten Ausführungsform sind der erste Wicklungsabschnitt und der zweite Wicklungsabschnitt des Transformators auf einem Kern derart gewickelt, dass sie nicht überlappen (d.h. nicht übereinander gewickelt sind). Besonders bevorzugt sind die Wicklungsabschnitte auf dem Kern voneinander beabstandet.

Im Zusammenhang mit vorliegender Erfindung umfasst der Begriff Streufeldtransformator auch Transformatoren, bei denen das Streufeld bzw. die Streuinduktivität im Verhältnis zum Gesamtfeld bzw. zur Gesamtinduktivität kleine Werte annimmt. Bevorzugt wird, wenn die Streuinduktivität des Transformators bzw. der jeweiligen Wicklungsabschnitte im Bereich zwischen 0.5% und 10% seiner Gesamtinduktivität, ganz besonders bevorzugt zwischen 1 % und 5% seiner Gesamtinduktivität liegt.

Diese besondere Ausgestaltung des Filters in einem Wechselrichter sorgt für eine effiziente Filterung der Oberwellen einer eingehenden Signalform, insbesondere eines Rechtecksignals, für den Betrieb eines induktiven Ladesystems. Dies ermöglicht die Bereitstellung eines nahezu sinusförmigen Ausgangssignals. Gleichzeitig kann die Ladevorrichtung aufgrund des Einsatzes eines Streufeldtransformators sehr kompakt und platzsparend gebaut werden. Schlussendlich sorgt die einfache und elegante Beschaltung für eine verlustarme Spannungswandlung bzw. -übertragung.

Gegenüber einer gleichartigen Filteranordnung mit zwei ungekoppelten Drosseln ergeben sich mehrere Vorteile:
- Beide Wicklungen (bzw. Wicklungsabschnitte) werden auf den gemeinsamen Kern gewickelt, benutzen also insbesondere denselben magnetischen Rückschluss, was Platz und Gewicht spart.
- Die sehr große Hauptinduktivität des Streufeld-Transformators bewirkt zusammen mit den Filterkondensatoren, dass die Gleichtakt-Signale von der Ladespule praktisch ferngehalten werden, was die Störsignale stark verringert. Eine sonst zusätzlich erforderliche "Common Mode Filterdrossel" entfällt damit.
- Durch die induktive Kopplung der beiden Wicklungsabschnitte werden die Halbleiter mit deutlich geringerem Stromrippel beaufschlagt, was die Verluste minimiert.

Unter Schalterstufe wird eine Schalteinheit bzw. eine Schaltstrecke verstanden, die zumindest einen ansteuerbaren Schalter, insbesondere Halbleiterschalter, wie MOSFETs, IGBTs, Transistoren, etc., aufweist, verstanden, die ein von der Ansteuerung der Schalterstufe abhängiges Ausgangssignal liefert, z.B. ein Rechtecksignal bzw. eine 'zerhackte' Gleichspannung.

Eine bevorzugte Ausführungsform zeichnet sich dadurch aus, dass zwischen dem Gleichspannungseingang und dem Wechselspannungsausgang eine erste Schalterstufe und eine zweite Schalterstufe geschaltet sind und dass die erste Schalterstufe mit dem Wechselspannungsausgang über den ersten Wicklungsabschnitt des Streufeldtransformators verbunden ist und die zweite Schalterstufe mit dem Wechselspannungsausgang über den zweiten Wicklungsabschnitt des Streufeldtransformators verbunden ist. Auf diese Weise können zwei, durch die jeweilige Schalterstufe geformte Signalformen (insbesondere Rechtecksignale) miteinander kombiniert werden, wodurch die Ausgangsleistung, z.B. über Variation der Phasenverschiebung zwischen den beiden Signalformen, regelbar wird.

Eine bevorzugte Ausführungsform zeichnet sich dadurch aus, dass der erste Wicklungsabschnitt und der zweite Wicklungsabschnitt in Serie geschaltet sind (d.h. innerhalb des Streufeldtransformators galvanisch verbunden) und dass ein Abgriff zwischen dem ersten Wicklungsabschnitt und dem zweiten Wicklungsabschnitt einen Pol des Wechselspannungsausganges bildet oder mit einem Pol des Wechselspannungsausganges verbunden ist. Damit kann eine besonders einfache Schaltung realisiert werden, bei der die Ausgangsspannung nahezu sinusförmig ist und bei der die Ausgangsströme deutlich höher sein können als die Eingangsströme. Auch können mit einer solchen Schaltung 'common-mode'-Effekte unterdrückt werden.

Eine bevorzugte Ausführungsform zeichnet sich dadurch aus, dass die Primärspule zwischen dem ersten Wicklungsabschnitt und dem zweiten Wicklungsabschnitt des Streufeldtransformators geschaltet ist. D.h. das Ende des ersten Wicklungsabschnittes ist mit dem einen Pol des Wechselspannungsausganges verbunden und das Ende des zweiten Wicklungsabschnittes ist mit dem anderen Pol des Wechselspannungsausganges verbunden. Die Wicklungsabschnitte sind somit parallel zueinander bzw. im Streufeldtransformator voneinander galvanisch getrennt. Diese Schaltung hat den Vorteil, dass keine Hauptfeld-Magnetisierung erfolgt und kein Gleichstrom durch die Wicklungen fließen kann. Damit ist eine stärkere magnetische Aussteuerung möglich.

Eine bevorzugte Ausführungsform zeichnet sich dadurch aus, dass das Verhältnis zwischen der auf den jeweils anderen Wicklungsabschnitt bezogenen Streuinduktivität und der Gesamtinduktivität eines Wicklungsabschnittes zumindest 1:200, besonders bevorzugt zumindest 1:100 beträgt.

In einer bevorzugten Ausführungsform beträgt das Verhältnis zwischen der auf den jeweils anderen Wicklungsabschnitt bezogenen Streuinduktivität und der Gesamtinduktivität eines Wicklungsabschnittes höchstens 1:10, besonders bevorzugt höchstens 1:20.

Das Verhältnis 1:100 entspricht dabei einem Kopplungsfaktor von 0.99; das Verhältnis 1:20 einem Kopplungsfaktor von 0.95.

Besonders bevorzugt ist es also, wenn die Streuinduktivität des Transformators bzw. der jeweiligen Wicklungsabschnitte im Bereich zwischen 0.5% und 10%, besonders bevorzugt zwischen 1 % und 5% seiner Gesamtinduktivität liegt.

Eine bevorzugte Ausführungsform zeichnet sich dadurch aus, dass der Streufeldtransformator hinsichtlich des ersten Wicklungsabschnittes und des zweiten Wicklungsabschnittes symmetrisch ausgebildet ist. D.h. beide Wicklungsabschnitte weisen dieselbe Anzahl an Wicklungen auf. Bei symmetrischen und gleichen Eingangssignalen, insbesondere Rechtecksignalen, wird dadurch eine besonders gute Annäherung an ein Sinussignal am Ausgang erreicht.

Eine bevorzugte Ausführungsform zeichnet sich dadurch aus, dass der Filter zumindest eine Kapazität umfasst, die zusammen mit den durch den Streufeldtransformator gebildeten Induktivitäten ein LC-Filter bildet. Dieses filtert aufgrund seiner bevorzugten Kennlinie Oberwellen besonders effizient heraus. Der in der vorliegenden Beschreibung verwendete Begriff Kapazität umfasst selbstverständlich Kondensatoren; bzw. wird eine Kapazität durch einen Kondensator realisiert.

Eine bevorzugte Ausführungsform zeichnet sich dadurch aus, dass das Filter zumindest vier Kapazitäten umfasst, die zwischen dem Gleichspannungseingang und dem Wechselspannungsausgang eine Vollbrücke bilden. Die Hauptinduktivitäten der jeweiligen Wicklungsabschnitte bilden nun zusammen mit diesen vier Kapazitäten ein Filter, welches eine Common-Mode-Aussteuerung der Primärspule wirksam verhindert. Besonders günstig ist die Ausführung mit vier gleich großen Kapazitäten, denn durch die so erreichte symmetrische Stromaufteilung ist die Rückwirkung auf den Gleichspannungs-Zwischenkreis besonders gering.

Eine bevorzugte Ausführungsform zeichnet sich dadurch aus, dass dem Wechselrichter ein (aus Resonanz-Kapazitäten gebildeter) kapazitiver Spannungsteiler nachgeschaltet ist. Damit kann die Impedanz des induktiven Übertragungssystems erhöht und so an die größere Ausgangsimpedanz des Filters angepasst werden.

Eine bevorzugte Ausführungsform zeichnet sich dadurch aus, dass zwischen den Polen des Gleichspannungseinganges eine Kapazität geschaltet ist. Dies dient zur Stützung des Gleichspannungs-Zwischenkreises.

Eine bevorzugte Ausführungsform zeichnet sich dadurch aus, dass zumindest eine Schalterstufe des Wechselrichters aus zwei, eine Halbbrücke bildenden Halbleiter-Schaltelementen gebildet wird.

Bevorzugt weist zumindest eine Schalterstufen-Halbbrücke antiparallele Dioden auf.

Bevorzugt weist zumindest eine Schalterstufen-Halbbrücke parallel zu den einzelnen Schalterelementen der Halbbrücke geschaltete Kapazitäten auf. Im Hinblick darauf, dass einzelne Schaltelemente bei hohen Strömen abschalten können, kann die Steilheit der Schaltflanke durch Einführung dieser Kapazitäten (bzw. Kondensatoren) vermindert werden, was die elektromagnetische Verträglichkeit verbessert.

Eine bevorzugte Ausführungsform zeichnet sich dadurch aus, dass zumindest eine Schalterstufe des Wechselrichters eine aus IGBTs gebildete Halbbrücke, vorzugsweise mit antiparallelen Dioden, umfasst und/oder dass zumindest eine Schalterstufe eine aus MOSFETs gebildete Halbbrücke, vorzugsweise mit parallel zu den einzelnen Schalterelementen der Halbbrücke geschalteten Kapazitäten, umfasst.

Die Aufgabe wird auch mit einem Verfahren zum Betreiben einer induktiven Ladevorrichtung nach einer der oben beschriebenen Ausführungsformen erreicht, wobei am Gleichspannungseingang des Wechselrichters eine Gleichspannung angelegt wird und die zumindest eine Schalterstufe mit einem Ansteuerungssignal angesteuert wird, um am Wechselspannungsausgang eine Wechselspannung zu erzeugen, wobei vorzugsweise die zumindest eine Schalterstufe derart angesteuert wird, dass die Wechselspannung am Wechselspannungsausgang eine Frequenz zwischen 10kHz und 180kHz, vorzugsweise zwischen 25kHz und 150kHz aufweist, wobei die bevorzugte Frequenz in dem (durch die Normengremien festgelegten) Band zwischen 80 und 90 kHz liegt.

Eine bevorzugte Ausführungsform zeichnet sich dadurch aus, dass die beiden Schalterstufen mit derselben Frequenz und zueinander phasenverschoben betrieben werden, wodurch sich ein besonders 'sinusnahes' Ausgangssignal ergibt.

Eine bevorzugte Ausführungsform zeichnet sich dadurch aus, dass die Frequenz und die Phase des Ansteuerungssignals steuerbar sind. Dies erhöht die Flexibilität und den Anwendungsbereich einer induktiven Ladevorrichtung.

Eine bevorzugte Ausführungsform zeichnet sich dadurch aus, dass die Schalterstufen derart angesteuert werden, dass an deren Ausgang jeweils ein im Wesentlichen symmetrisches Rechtecksignal anliegt, vorzugsweise mit einem Tastverhältnis von im Wesentlichen 50%, wodurch sich ebenfalls ein oberwellen-armes und symmetrisches Ausgangssignal ergibt.

Eine bevorzugte Ausführungsform zeichnet sich dadurch aus, dass die an der Primärspule zur Verfügung stehende Leistung durch eine Veränderung der Phasenverschiebung zwischen den Ansteuerungssignalen der beiden Schalterstufen eingestellt wird. Dies ermöglicht eine besonders einfache Regelung, die aufgrund des Streufeldtransformators, leistungsunabhängig Ausgangssignale mit einem sehr geringen Oberwellenanteil ermöglicht.

Eine bevorzugte Ausführungsform zeichnet sich dadurch aus, dass die Frequenz und/oder die Phasenverschiebung der Ansteuerungssignale der Schalterstufen so eingestellt wird, dass am Ausgang des Filters bzw. am Eingang des induktiven Übertragungssystems (Primärspule) Strom und Spannung in Phase sind oder der Cosinus des Phasenunterschiedes zwischen Strom und Spannung auf einen definierten bzw. vorgegebenen Wert, vorzugsweise auf einen Wert größer-gleich 0.95, z.B. 0.95, geregelt werden, wobei der Strom der Spannung leicht nacheilt. Damit ergibt sich eine besonders niedrige Strombelastung der Primärspule des induktiven Übertragungssystems, was sowohl einen hohen Wirkungsgrad ermöglicht als auch die magnetische Feldstärke möglichst niedrig und damit unter den zulässigen Grenzwerten hält.

Eine bevorzugte Ausführungsform zeichnet sich dadurch aus, dass der durch das Filter gebildete Schwingkreis auf eine Frequenz unterhalb der minimalen Arbeitsfrequenz der induktiven Ladevorrichtung abgestimmt ist, vorzugsweise auf höchstens 85%, besonders bevorzugt auf höchstens etwa 82% der minimalen Arbeitsfrequenz. Die abgestimmte Frequenz kann vorzugsweise die Resonanzfrequenz oder leicht über dieser liegend sein. Dadurch werden alle Frequenzen oberhalb der Arbeitsfrequenz besonders wirksam weggefiltert, also auch die Oberwellen der Rechtecksignale, sodass Ausgangsspannung und -strom praktisch sinusförmig sind.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung beschrieben sind. Dabei können die in den Ansprüchen und in der Beschreibung erwähnten Merkmale jeweils einzeln für sich oder in beliebiger Kombination erfindungswesentlich sein.

Die Bezugszeichenliste ist Bestandteil der Offenbarung. Die Figuren werden zusammenhängend und übergreifend beschrieben. Gleiche Bezugszeichen bedeuten gleiche Bauteile, Bezugszeichen mit unterschiedlichen Indices geben funktionsgleiche oder ähnliche Bauteile an.

Es zeigen dabei:
- Fig. 1: schematisch das Grundprinzip beim induktiven Laden eines Fahrzeuges,
- Fig. 2: einen Ausschnitt einer erfindungsgemäßen Ladevorrichtung,
- Fig. 3: ein Beispiel eines Streufeldtransformators,
- Fig. 4: ein Ersatzschaltbild eines Streufeldtransformators,
- Fig. 5: Spannungen und Ströme im bzw. nach dem Wechselrichter,
- Fig. 6: eine weitere Ausführungsform einer erfindungsgemäßen Ladevorrichtung,
- Fig. 7: eine weitere Ausführungsform einer erfindungsgemäßen Ladevorrichtung,
- Fig. 8: ein Beispiel einer Implementierung in ein Gesamtsystem.

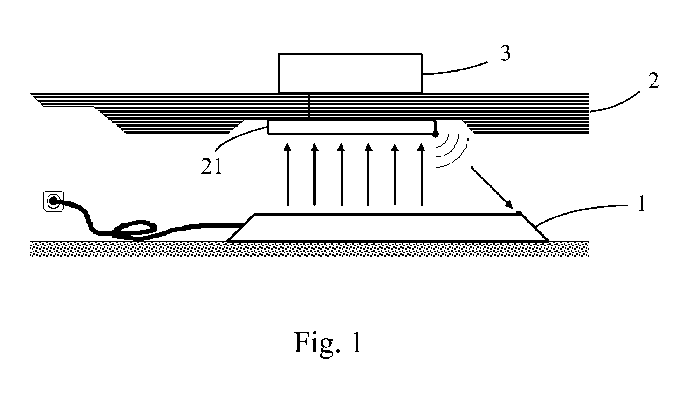

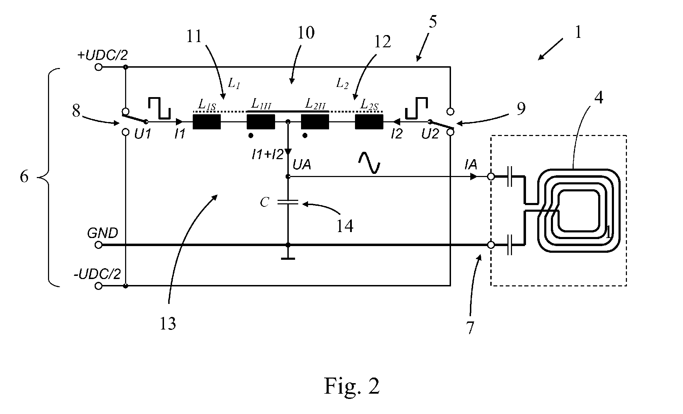

Fig. 1 zeigt in schematischer Darstellung eine induktive Ladevorrichtung 1 zum Laden eines elektrischen Energiespeichers 3 eines Fahrzeuges 2. Dazu wird die Energie von einer Primärspule 4 (Fig. 2) der Ladevorrichtung auf die fahrzeugseitig angeordnete Sekundärspule 21 übertragen. Im dargestellten Ausführungsbeispiel ist die Sekundärspule 21 im Boden des (nur rein schematisch angedeuteten) Elektrofahrzeuges angeordnet und mit dem Energiespeicher 3, insbesondere einer Batterie oder einem Akkumulators, über einen (nicht dargestellten) Gleichrichter verbunden.

Fig. 2 zeigt ein Ausführungsbeispiel einer induktiven Ladevorrichtung 1 umfassend eine Primärspule 4 und einen der Primärspule 4 vorangeschalteten Wechselrichter 5 zur Umwandlung einer Gleichspannung in eine Wechselspannung, wobei der Wechselrichter 5 einen Gleichspannungseingang 6 und einen Wechselspannungsausgang 7 umfasst. Zwischen dem Gleichspannungseingang 6 und dem Wechselspannungsausgang 7 sind zwei Schalterstufen 8, 9 und zumindest ein Filter 13 geschaltet. Der Filter 13 umfasst einen Streufeldtransformator 10 mit einem ersten Wicklungsabschnitt 11 und einem zweiten Wicklungsabschnitt 12. Die Wicklungsabschnitte 11, 12 stellen jeweils Drosseln dar, die miteinander induktiv gekoppelt sind, wobei ein Anteil des Flusses als Streufluss den jeweils anderen Wicklungsabschnitt nicht durchdringt. Bevorzugt beträgt das Verhältnis zwischen der auf den jeweils anderen Wicklungsabschnitt 12, 11 bezogenen Streuinduktivität und der Gesamtinduktivität eines Wicklungsabschnittes 11, 12 zumindest 1:100, vorzugsweise höchstens 1:20. Selbstverständlich kann dieses Streuinduktivitäts-Verhältnis auch Werte unterhalb bzw. oberhalb dieses bevorzugten Bereiches annehmen.

### Zwischen dem Gleichspannungseingang 6 und dem

Wechselspannungsausgang 7 sind eine erste Schalterstufe 8 und eine zweite Schalterstufe 9 geschaltet. Die erste Schalterstufe 9 ist mit dem Wechselspannungsausgang 7 über den ersten Wicklungsabschnitt 11 des Streufeldtransformators 10 verbunden. Die zweite Schalterstufe 12 ist mit dem Wechselspannungsausgang 7 über den zweiten Wicklungsabschnitt 12 des Streufeldtransformators 10 verbunden.

Der erste Wicklungsabschnitt 11 und der zweite Wicklungsabschnitt 12 sind in Serie geschaltet. Ein Abgriff zwischen dem ersten Wicklungsabschnitt 11 und dem zweiten Wicklungsabschnitt 12 bildet einen Pol des Wechselspannungsausganges 7 bzw. ist mit einem Pol des Wechselspannungsausganges 7 verbunden.

Um eine möglichst sinusförmige Spannung und damit wenig Oberwellenanteil zu erreichen, wird für die Ansteuerung der Primärspule 4 beispielsweise folgende Schaltung angewendet:

Die Schalterstufen 8, 9 bilden je eine gesteuerte Wechselrichter-Untereinheit; beide Schalterstufen 8, 9 liefern je ein im wesentlichen symmetrisches Rechtecksignal U₁, U₂ mit derselben Frequenz (vorzugsweise mit einem Tastverhältnis von 50%). Das Spannungssignal U₁ ist gegenüber dem Spannungssignal U₂ phasenverschoben. Vorzugsweise sind sowohl die Frequenz als auch die Phasenverschiebung durch entsprechende Ansteuerung der Schalterstufen 8, 9 einstellbar.

Am Ausgang jeder Wechselrichter-Untereinheit ist je eine Wicklung 11, 12 eines symmetrischen Streufeldtrafos 10 angeschlossen. Dieser ist somit aus zwei Spulen bzw. Induktivitäten L₁, L₂ aufgebaut, die auf einen gemeinsamen Kern gewickelt sind. Der Streufeldtransformator 10 ist hinsichtlich des ersten Wicklungsabschnittes 11 und des zweiten Wicklungsabschnittes 12 symmetrisch ausgebildet (selbe Wicklungsanzahl).

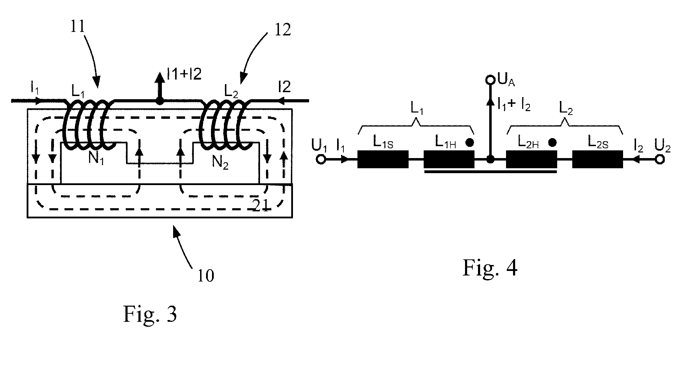

Fig. 3 zeigt einen möglichen Aufbau eines Streufeldtransformators 10 und Fig. 4 zeigt das Ersatzschaltbild, wobei die ohmschen Widerstände der Einfachheit halber weggelassen wurden. Zur Vereinfachung der Betrachtungen ist der Streufeldtransformator 10 als 'idealer Trafo' mit den 'idealen' Induktivitäten L_{1H}, L_{2H} zusätzlich mit seinen Streuinduktivitäten L_{1S}, L_{2S} dargestellt. Die Streuinduktivität kommt dadurch zustande, dass der Transformator so konstruiert ist, dass nur ein Teil des durch die erste Wicklung erzeugten magnetischen Flusses die zweite Wicklung durchdringt und umgekehrt.

Unabhängig von den jeweiligen anderen bevorzugten Ausführungsformen der Erfindung kann der Streufeldtransformator 10 folgende bevorzugte Merkmale aufweisen: Der Streufeldtransformator 10 umfasst vorzugsweise einen Kern, der eine ringartige Kontur aufweist. Zusätzlich kann von einer (Längs)Seite des Kerns ein Vorsprung in Richtung der anderen (Längs)Seite des Kerns ragen (in Fig. 3 von oben nach unten). Dabei ist vorzugsweise zwischen dem Vorsprung und der anderen (Längs)Seite des Kerns ein Luftspalt vorgesehen. Die Wicklungsabschnitte 11, 12 überlappen in der dargestellten Ausführungsform nicht (d.h. sie sind nicht übereinander gewickelt). Der Vorsprung des Kerns befindet sich dabei zwischen dem ersten Wicklungsabschnitt 11 und dem zweiten Wicklungsabschnitt 12, die vorzugsweise um zumindest die Breite des Vorsprunges voneinander beabstandet sind.

Der Filter 13 umfasst zumindest eine Filter-Kapazität 14, die zusammen mit den durch den Streufeldtransformator 10 gebildeten Induktivitäten ein LC-Filter bildet. Dabei bilden die Streuinduktivitäten L_{1S}, L_{2S} bilden zusammen mit dem Kondensator 14 einen Schwingkreis, welcher vorzugsweise auf eine Frequenz unterhalb der minimalen Arbeitsfrequenz des induktiven Übertragungssystems abgestimmt ist, vorzugsweise auf höchstens 85% der minimalen Arbeitsfrequenz, z.B. auf etwa 82% der minimalen Arbeitsfrequenz. Dadurch werden alle Frequenzen oberhalb der Arbeitsfrequenz weggefiltert, also auch die Oberwellen der Rechtecksignale U₁, U₂, sodass die Ausgangswechselspannung U_{A} und der Ausgangswechselstrom I_{A} praktisch sinusförmig sind. U_{A} wird dem induktiven Übertragungssystem, d.h. der Primärspule 4, zugeführt.

Die Frequenz und die Phasenverschiebung von U₁ und U₂ werden so eingestellt, dass sich ein optimaler Betrieb des angeschlossenen induktiven Übertragungssystems ergibt.

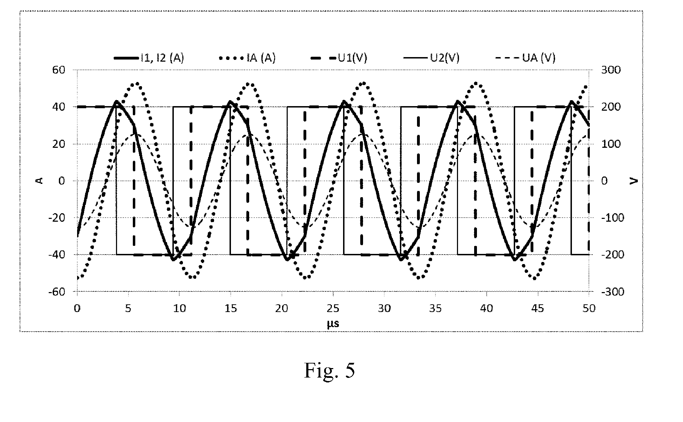

Aus dem in Fig. 5 dargestellten Diagramm ist ein wesentlicher Vorteil des erfindungsgemäßen Systems ersichtlich: durch die transformatorische Kopplung und die damit verbundene Untersetzung kann die Amplitude des Ausgangsstroms I_{A} deutlich höher sein als die der Eingangsströme I₁, I₂. Man erkennt außerdem, dass der Ausgangswechselstrom I_{A} und die Ausgangswechselspannung U_{A} praktisch sinusförmig sind, obwohl der Eingang des Filters 13 mit rechteckförmigen Spannungen U₁, U₂ angesteuert wird.

Die Ansteuerung bzw. das Regelverfahren erfolgt folgendermaßen: Die Ansteuerung erfolgt mit zwei symmetrischen Rechtecksignalen (und einem Tastverhältnis von 50%). Die Leistung des Systems wird durch eine Veränderung der Phasenverschiebung der beiden Eingangssignale U₁, U₂ eingestellt. Die Frequenz wird so vorzugsweise so eingestellt, dass am Eingang des Filters 13 bzw. des daraus gebildeten Resonanzkreises der Strom und die Spannung in Phase sind bzw. sich leicht "induktiv" verhalten (cosϕ > 0.95).

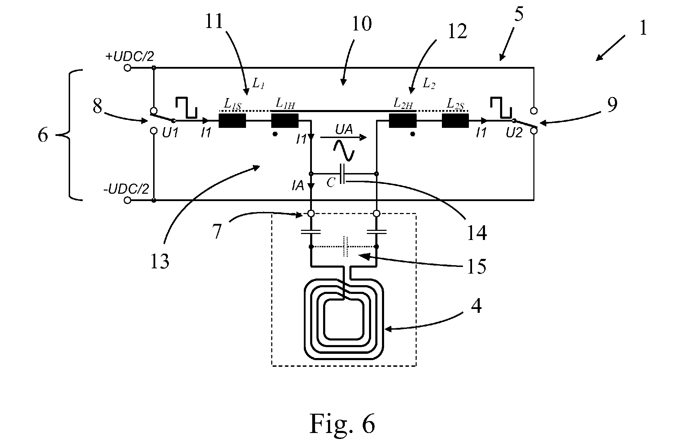

Fig. 6 zeigt eine Variante der Erfindung, bei der die Primärspule 4 zwischen dem ersten Wicklungsabschnitt 11 und dem zweiten Wicklungsabschnitt 12 des Streufeldtransformators 10 geschaltet ist. Somit wird die Primärseite des induktiven Übertragungssystems (d.h. die Primärspule 4) zwischen die beiden Transformatorwicklungen geschaltet. Die zweite Wicklung 12 wird dabei in Bezug zur Ausführungsform aus Fig. 2 "umgedreht" bzw. verläuft gegensinnig, d.h. die Einspeisung der Rechtecksignale erfolgt bei den Wicklungs-Anfängen, die Ausgangsspannung liegt zwischen den beiden Wicklungs-Enden an.

Diese Schaltung hat den Vorteil, dass keine Hauptfeld-Magnetisierung erfolgt und kein Gleichstrom durch die Wicklungen 11, 12 fließen kann. Damit ist eine stärkere magnetische Aussteuerung möglich.

In der in Fig. 6 dargestellten Ausführungsform wurde als weitere Variante ein (dem Wechselrichter 5 nachgeschalteter) aus Resonanz-Kapazitäten gebildeter kapazitiver Spannungsteiler 15 im induktiven Übertragungssystem angedeutet (gestrichelter Kondensator). Damit kann die Impedanz des induktiven Übertragungssystems erhöht und so an die größere Ausgangsimpedanz des Filters 13 angepasst werden.

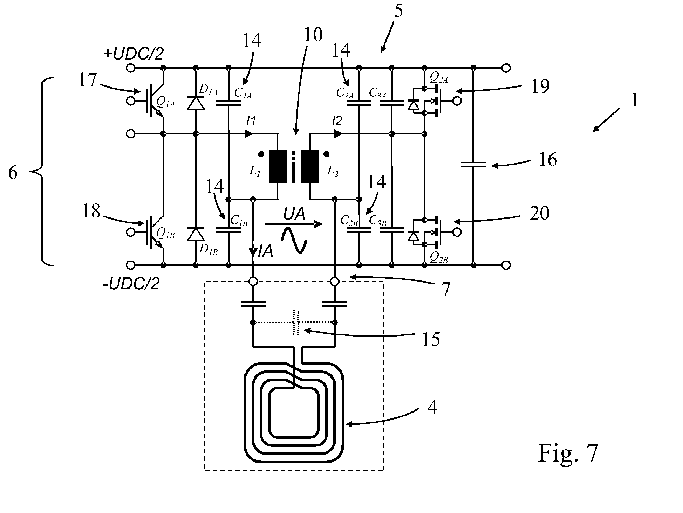

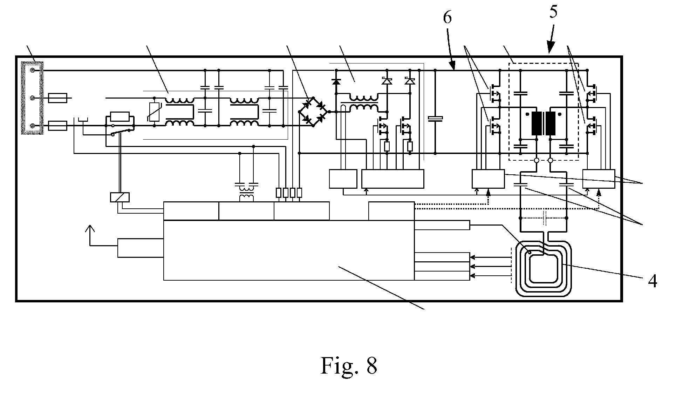

In einer weiteren Ausführungsform (Fig. 7) wird zumindest eine Schalterstufe 8, 9 des Wechselrichters 5 aus zwei, eine Halbbrücke bildenden Schaltelementen 17, 18; 19, 20 gebildet. Dabei bilden das obere Schaltelement 17 und das untere Schaltelement 18 eine Schalterstufe 8; und das obere Schaltelement 19 und das untere Schaltelement 20 eine Schalterstufe 9 (siehe auch Fig. 8). In Fig. 7 umfasst eine Schalterstufe des Wechselrichters 5 eine aus IGBTs gebildete Halbbrücke vorzugsweise mit antiparallelen Dioden und eine andere Schalterstufe eine aus MOSFETs gebildete Halbbrücke. Um die Darstellung zu vereinfachen, wurden L₁ und L₂ nicht mehr in Streu-und Hauptinduktivität aufgeteilt. Gegenüber der Ausführungsform aus Fig. 6 bestehen folgende Unterschiede:

Der ursprüngliche eine Filterkondensator 14 wurde auf vier Kondensatoren 14 (C_{1A}, C_{1B}, C_{2A}, C_{2B}) aufgeteilt, die als Vollbrücke angeordnet sind, wobei deren oberer bzw. unterer Anschluss mit den beiden Polen des Gleichspannungseinganges 6 (DC-Versorgungsspannung) verbunden sind. Die Hauptinduktivität von L₁ bzw. L₂ bildet nun zusammen mit den Kapazitäten 14 ein Filter 13, welches eine Common-Mode-Aussteuerung der Primärspule 4 wirksam verhindert. Die differenzielle Filterwirkung zur Erzeugung des Sinussignals basiert auf den Streuinduktivitäten wie bei den Schaltung aus Fig. 2 und 6.

Die elektronischen Schalterstufen 8, 9 der vorhergehenden Ausführungsformen wurden in einer beispielhaften Ausführung als IGBT-Halbbrücke (Q_{1A}, Q_{1B}) mit antiparallelen Dioden (D_{1A}, D_{1B}) bzw. als MOSFET-Halbbrücke (Q_{2A}, Q_{2B}) dargestellt. Da insbesondere die Schaltelemente Q_{2A}, Q_{2B} bei hohen Strömen abschalten, kann die Steilheit der Schaltflanke durch Einführung von (zu den jeweiligen Schaltelementen parallel geschalteten) Kondensatoren C_{3A}, C_{3B} vermindert werden, was die elektromagnetische Verträglichkeit verbessert.

Zur Stützung des Gleichspannungs-Zwischenkreises dient der Kondensator 16 (Gleichspannungs-Zwischenkreis-Kapazität) zwischen den Polen des Gleichspannungseinganges 6.

Fig. 8 zeigt die mögliche Integration in ein Gesamtsystem. Dem Netzeingang 22 ist ein Netzfilter 23 nachgeschaltet. Zwischen dem Netzfilter 23 und einer PFC(power correction factor)-Stufe 25 ist ein Netzgleichrichter 24 geschaltet. Mit dem Ausgang der PFC-Stufe 25 ist der Gleichspannungseingang 6 des Wechselrichters 5 verbunden. Mit dem Bezugszeichen 26 sind die Treiber für die Schalterstufen 8, 9 bzw. für die einzelnen Schaltelemente der Schalterstufen 8, 9 bezeichnet. Die Treiber werden von einem Controller 27 gesteuert.

Im Folgenden wird ein bevorzugtes Verfahren zum Betrieb einer induktiven Ladevorrichtung 1 näher beschrieben. Dabei wird am Gleichspannungseingang 6 des Wechselrichters 5 eine Gleichspannung angelegt. Dies kann z.B. dadurch erfolgen, dass eine Wechselspannung z.B. aus der Steckdose, gleichgerichtet wird. Die Schalterstufen bzw. deren Schaltelemente werden mit einem Ansteuerungssignal angesteuert, um am Wechselspannungsausgang 7 eine Wechselspannung zu erzeugen. Vorzugsweise wird die zumindest eine Schalterstufe derart angesteuert, dass die Wechselspannung am Wechselspannungsausgang eine Frequenz zwischen 10kHz und 180kHz, vorzugsweise zwischen 25kHz und 150kHz aufweist.

Die beiden Schalterstufen 8, 9 werden mit derselben Frequenz und zueinander phasenverschoben betrieben. Die Frequenz und die Phase des Ansteuerungssignals der Schaltelemente sind vorzugsweise veränderbar.

Die Schalterstufen werden derart angesteuert, dass an deren Ausgang jeweils ein im Wesentlichen symmetrisches Rechtecksignal anliegt, vorzugsweise mit einem Tastverhältnis von im Wesentlichen 50%.

Die an der Primärspule 4 zur Verfügung stehende Leistung kann durch eine Veränderung der Phasenverschiebung zwischen den Ansteuerungssignalen der beiden Schalterstufen eingestellt werden. Die Frequenz der Ansteuerungssignale der Schalterstufen wird vorzugsweise so eingestellt wird, dass am Eingang des durch den Filter 13 gebildeten Schwingkreises Strom und Spannung in Phase sind oder der Cosinus des Phasenunterschiedes zwischen Strom und Spannung größer als 0.95 ist.

Der durch den Filter 13 gebildete Schwingkreis wird auf eine Frequenz unterhalb der minimalen Arbeitsfrequenz der induktiven Ladevorrichtung 1 abgestimmt, vorzugsweise auf höchstens 85%, besonders bevorzugt höchstens etwa 82% der minimalen Arbeitsfrequenz.

Die Erfindung ist nicht auf die beschriebenen Ausführungsformen und die darin hervorgehobenen Aspekte beschränkt. Vielmehr ist innerhalb des Erfindungsgedankens eine Vielzahl von Abwandlungen möglich, die im Rahmen fachmännischen Handelns liegen. Ebenso ist es möglich, durch Kombination der genannten Mittel und Merkmale weitere Ausführungsvarianten zu realisieren, ohne den Rahmen der Erfindung zu verlassen.

### Bezugszeichenliste

- 1: Induktive Ladevorrichtung
- 2: Fahrzeug
- 3: Elektrischer Energiespeicher
- 4: Primärspule
- 5: Wechselrichter
- 6: Gleichspannungseingang
- 7: Wechselspannungsausgang
- 8: Erste Schalterstufe
- 9: Zweite Schalterstufe
- 10: Streufeldtransformator
- 11: Erster Wicklungsabschnitt
- 12: Zweiter Wicklungsabschnitt
- 13: Filter
- 14: Filter-Kapazität
- 15: Resonanz-Kapazität / kapazitiver Spannungsteiler
- 16: Gleichspannungs-Zwischenkreis-Kapazität
- 17: (Oberes) Schaltelement der ersten Schalterstufe 8
- 18: (Unteres) Schaltelement der ersten Schalterstufe 8
- 19: (Oberes) Schaltelement der zweiten Schalterstufe 9
- 20: (Unteres) Schaltelement der zweiten Schalterstufe 9
- 21: Sekundärspule
- 22: Netzeingang
- 23: Netzfilter
- 24: Netzgleichrichter
- 25: PFC-Stufe
- 26: Treiber für die Schaltelemente
- 27: Controller

- C_{1A}, C_{1B}, C_{2A}, C_{2B}, C_{3A}, C_{3B}: Kapazitäten bzw. Kondensatoren
- D_{1A}, D_{1B}: Dioden
- L₁, L₂ ; L_{1H}, L_{2H} ; L_{1S}, L_{2S}: Induktivitäten
- N₁, N₂: Wicklungszahlen
- Q_{1A}, Q_{1B} ; Q_{2A}, Q_{2B}: Schaltelemente (MOSFETs, IGBTs)
- I₁,: I₂ Eingangsströme
- U₁, U₂: Eingangsspannungen
- I_{A}: Ausgangswechselstrom
- U_{A}: Ausgangswechselspannung

## Patentansprüche

1. Induktive Ladevorrichtung (1) zum Laden eines elektrischen Energiespeichers (3) eines Fahrzeuges (2), umfassend eine Primärspule (4) und einen der Primärspule (4) vorangeschalteten Wechselrichter (5) zur Umwandlung einer Gleichspannung in eine Wechselspannung, wobei der Wechselrichter (5) einen Gleichspannungseingang (6) und einen Wechselspannungsausgang (7) umfasst und wobei zwischen dem Gleichspannungseingang (6) und dem Wechselspannungsausgang (7) zumindest eine Schalterstufe (8, 9) und zumindest ein Filter (13) geschaltet sind, **dadurch gekennzeichnet, dass** der Filter (13) einen Streufeldtransformator (10) mit einem ersten Wicklungsabschnitt (11) und einem zweiten Wicklungsabschnitt (12) umfasst.

2. Ladevorrichtung nach Anspruch 1, **dadurch gekennzeichnet, dass** zwischen dem Gleichspannungseingang (6) und dem Wechselspannungsausgang (7) eine erste Schalterstufe (8) und eine zweite Schalterstufe (9) geschaltet sind und dass die erste Schalterstufe (9) mit dem Wechselspannungsausgang (7) über den ersten Wicklungsabschnitt (11) des Streufeldtransformators (10) verbunden ist und die zweite Schalterstufe (12) mit dem Wechselspannungsausgang (7) über den zweiten Wicklungsabschnitt (12) des Streufeldtransformators (10) verbunden ist.

3. Ladevorrichtung nach Anspruch 1 oder 2, **dadurch gekennzeichnet, dass** der erste Wicklungsabschnitt (11) und der zweite Wicklungsabschnitt (12) in Serie geschaltet sind und dass ein Abgriff zwischen dem ersten Wicklungsabschnitt (11) und dem zweiten Wicklungsabschnitt (12) einen Pol des Wechselspannungsausganges (7) bildet oder mit einem Pol des Wechselspannungsausganges (7) verbunden ist.

4. Ladevorrichtung nach Anspruch 1 oder 2 , **dadurch gekennzeichnet, dass** die Primärspule (4) zwischen dem ersten Wicklungsabschnitt (11) und dem zweiten Wicklungsabschnitt (12) des Streufeldtransformators (10) geschaltet ist.

5. Ladevorrichtung nach einem der vorhergehenden Ansprüche, **dadurch gekennzeichnet, dass** das Verhältnis zwischen der auf den jeweils anderen Wicklungsabschnitt (12, 11) bezogenen Streuinduktivität und der Gesamtinduktivität eines Wicklungsabschnittes (11, 12) zumindest 1:200, vorzugsweise zumindest 1:100 beträgt, **und/oder dass** das Verhältnis zwischen der auf den jeweils anderen Wicklungsabschnitt (12, 11) bezogenen Streuinduktivität und der Gesamtinduktivität eines Wicklungsabschnittes (11, 12) höchstens 1:10, vorzugsweise höchstens 1:20 beträgt.

6. Ladevorrichtung nach einem der vorhergehenden Ansprüche, **dadurch gekennzeichnet, dass** der Streufeldtransformator (10) hinsichtlich des ersten Wicklungsabschnittes (11) und des zweiten Wicklungsabschnittes (12) symmetrisch ausgebildet ist.

7. Ladevorrichtung nach einem der vorhergehenden Ansprüche, **dadurch gekennzeichnet, dass** der Filter (13) zumindest eine Filter-Kapazität (14) umfasst, die zusammen mit den durch den Streufeldtransformator (10) gebildeten Induktivitäten ein LC-Filter bildet, **und dass vorzugsweise** der Filter (13) zumindest vier Filter-Kapazitäten (14) umfasst, die zwischen dem Gleichspannungseingang (6) und dem Wechselspannungsausgang (7) eine Vollbrücke bilden.

8. Ladevorrichtung nach einem der vorhergehenden Ansprüche, **dadurch gekennzeichnet, dass** dem Wechselrichter (10) ein kapazitiver Spannungsteiler (15) nachgeschaltet ist, **und/oder dass** zwischen den Polen des Gleichspannungseinganges (6) eine Kapazität (16) geschaltet ist.

9. Ladevorrichtung nach einem der vorhergehenden Ansprüche, **dadurch gekennzeichnet, dass** zumindest eine Schalterstufe (8, 9) des Wechselrichters (5) aus zwei, eine Halbbrücke bildenden Schaltelementen (17, 18; 19, 20) gebildet wird.

10. Ladevorrichtung nach einem der vorhergehenden Ansprüche, **dadurch gekennzeichnet, dass** zumindest eine Schalterstufe des Wechselrichters eine aus IGBTs gebildete Halbbrücke vorzugsweise mit antiparallelen Dioden umfasst und/oder dass zumindest eine Schalterstufe eine aus MOSFETs gebildete Halbbrücke umfasst.

11. Verfahren zum Betrieb einer induktiven Ladevorrichtung (1) nach einem der vorhergehenden Ansprüche, **dadurch gekennzeichnet, dass** am Gleichspannungseingang (6) des Wechselrichters (5) eine Gleichspannung angelegt wird und die zumindest eine Schalterstufe (8, 9) mit einem Ansteuerungssignal angesteuert wird, um am Wechselspannungsausgang (7) eine Wechselspannung zu erzeugen, wobei vorzugsweise die zumindest eine Schalterstufe (8, 9) derart angesteuert wird, dass die Wechselspannung am Wechselspannungsausgang eine Frequenz zwischen 10kHz und 180kHz, vorzugsweise zwischen 25kHz und 150kHz, besonders bevorzugt zwischen 80kHz und 90kHz aufweist.

12. Verfahren nach Anspruch 11, **dadurch gekennzeichnet, dass** die beiden Schalterstufen (8, 9) mit derselben Frequenz und zueinander phasenverschoben betrieben werden.

13. Verfahren nach Anspruch 11 oder 12, **dadurch gekennzeichnet, dass** die Frequenz und/oder die Phase des Ansteuerungssignals einer Schalterstufe (8, 9) steuerbar sind, **und dass vorzugsweise** die an der Primärspule (4) zur Verfügung stehende Leistung durch eine Veränderung der Phasenverschiebung zwischen den Ansteuerungssignalen der beiden Schalterstufen (8, 9) eingestellt wird.

14. Verfahren nach einem der Ansprüche 11 bis 13, **dadurch gekennzeichnet, dass** die Schalterstufen (8, 9) derart angesteuert werden, dass an deren Ausgang jeweils ein im Wesentlichen symmetrisches Rechtecksignal anliegt, vorzugsweise mit einem Tastverhältnis von im Wesentlichen 50%.

15. Verfahren nach einem der Ansprüche 11 bis 14, **dadurch gekennzeichnet, dass** die Frequenz der Ansteuerungssignale der Schalterstufen (8, 9) so eingestellt wird, dass am Ausgang des Filters (13) bzw. am Eingang der Primärspule (4) Strom und Spannung in Phase sind oder der Cosinus des Phasenunterschiedes zwischen Strom und Spannung auf einen vorgegebenen Wert, vorzugsweise auf einen Wert größer-gleich 0.95, z.B. 0.95, geregelt wird, wobei der Strom der Spannung leicht nacheilt, **und/oder dass**
der durch den Filter (13) gebildete Schwingkreis auf eine Frequenz unterhalb der minimalen Arbeitsfrequenz der induktiven Ladevorrichtung (1) abgestimmt ist, vorzugsweise auf höchstens 85%, besonders bevorzugt auf höchstens etwa 82% der minimalen Arbeitsfrequenz.
